Europäisches Patentamt

European Patent Office

Office européen des brevets

(19)

(11) Veröffentlichungsnummer: **0 461 545 A2**

# (12) EUROPÄISCHE PATENTANMELDUNG

(21) Anmeldenummer: 91109238.5

(51) Int. Cl.⁵: **A01G 9/10**

(22) Anmeldetag: 06.06.91

(30) Priorität: 12.06.90 DE 4018718

(43) Veröffentlichungstag der Anmeldung:
18.12.91 Patentblatt 91/51

(84) Benannte Vertragsstaaten:
AT BE CH DE DK ES FR GB GR IT LI LU NL

(71) Anmelder: **SPÜHL AG**
**Lukasstrasse 18**
**CH-9009 St. Gallen(CH)**

(72) Erfinder: **Teichmann, Manfred**
**Dorfstrasse13**
**CH-9303 Wittenbach(CH)**

(74) Vertreter: **Riebling, Peter, Dr.-Ing.,**
**Patentanwalt**
**Rennerle 10, Postfach 31 60**
**W-8990 Lindau/B.(DE)**

(54) **Verfahren und Vorrichtung zur Herstellung von Formkörpern.**

(57) Beschrieben wird ein Verfahren und eine Vorrichtung zur Herstellung von Formkörpern aus Torf und synthetischem Material zum Aufziehen eines Sämlings, wobei der Sämling in dem Torf ggf. mit Zusätzen von Nährstoffen angeordnet ist und hierbei zunächst ein Gemisch aus Torf und Wasser ggf. unter Zusatz von Nährstoffen mit einem hydrophilen Polyurethan-Prepolymeren vermischt wird. Aus dem breiartigen Gemisch werden Formkörper geformt, die anschließend aushärten. Das Gemisch wird in Form eines endlosen Breistranges auf ein Förderband aufgegeben und ausgewalzt und anschließend werden mit einem Formtablett reihenweise Formkörper ausgestochen.

FIG 1

EP 0 461 545 A2

Die Erfindung bezieht sich auf ein Verfahren zur Herstellung von Formkörpern aus Torf und synthetischem Material zum Aufziehen eines Sämlings, wobei der Sämling in dem Torf ggf. mit Zusätzen von Nährstoffen angeordnet ist und hierbei zunächst ein Gemisch aus Torf und Wasser ggf. unter Zusatz von Nährstoffen mit einem hydrophilen Polyurethan-Prepolymeren vermischt wird und aus dem breiartigen Gemisch Formkörper geformt werden, die anschließend aushärten.

Die Erfindung bezieht sich auch auf die Vorrichtung zur Herstellung von Formkörpern aus Torf und synthetischem Material, wobei zunächst in einer Mischstation ein Gemisch aus Torf und Wasser ggf. unter Zusatz von Nährstoffen hergestellt wird und im weiteren diesem Gemisch ein Kunststoff aus hydrophilen Polyurethan-Prepolymeren zugesetzt wird, wobei ein breiartiges Gemisch erzeugt wird, aus dem im weiteren Formkörper geformt werden, die anschließend aushärten.

Ein Verfahren und eine Vorrichtung der eingangs genannten Art ist bereits aus der Anmeldung P 38 29 256.4 des Anmelders bekannt. Bei dem bekannten Verfahren wurde ebenfalls Torf-Wasser-Gemisch in einem Mischer zubereitet und dieses Torf-Wasser-Gemisch wurde über eine Förderschnecke in eine Mischstation gegeben, wo das Torf-Wasser-Gemisch mit einem Kunststoff versetzt und gemischt wurde. Der Kunststoffanteil trägt etwa 6 - 8 Gewichtsprozent, wobei vorzugsweise als Kunststoff Hypol zugesetzt wurde.

Bei dem bekannten Verfahren wurde in Verbindung mit der Vorrichtung das Kunststoff-Wasser-Torfgemisch in fertige Tabletts bzw. Trays eingefüllt und härtete dort aus. Unter dem Begriff "Tray" wird im folgenden eine bestimmte Art von Tablett verstanden, wobei es sich um ein rasterförmiges Kunststoff-Tableau mit einer Höhe von etwa 5 cm und Kantenabmessungen von etwa 40 cm x 30 cm handelt.

Bei dem Tablett bzw. Tray sind demnach eine Vielzahl von gleichmässigen, rechteckförmigen Ausnehmungen angeordnet, wobei in einem derartigen Tray oder Formtablett eine Vielzahl von Kunststoffkörpern bzw. Plugs hergestellt werden können.

Das Wesen des bekannten Verfahrens bzw. der Vorrichtung bestand darin, daß - sobald das Gemisch in den Trays eingefüllt war - im Anschluß daran eine Längsschneide- und Querschneidevorrichtung in Aktion trat, wobei bewegliche Schlitten mit Schnittscheiben verwendet wurden, welche in Längs- und Querrichtung die Formkörper aus dem Formtablett herausschnitten.

Das bekannte Verfahren und die Vorrichtung mit den beweglichen Schlitten mit den Schnittscheiben ist jedoch konstruktiv relativ aufwendig.

Aufgabe der vorliegenden Erfindung ist es deshalb, ein Verfahren und eine Vorrichtung der eingangs genannten Art so weiterzubilden, daß Formkörper aus einem Kunststoff-Wasser-Torfgemisch konstruktiv einfach und relativ schnell hergestellt werden können.

Zur Lösung der Aufgabe ist es bei dem Verfahren vorgesehen, daß das Gemisch in Form eines endlosen Breistranges auf ein Förderband aufgegeben und ausgewalzt wird und daß im weiteren mit einem Formtablett, welches von oben auf den Breistrang aufgedrückt wird, reihenweise Formkörper ausgestochen werden.

Die Vorrichtung ist so ausgebildet, daß ein Förderband mit einer oberhalb angeordneten Walze vorgesehen ist, wo der Breistrang ausgewalzt wird und daß oberhalb des Förderbandes zur Zuführung des Formtabletts eine Rutsche ausgebildet ist und im weiteren in Verbindung mit dem Ausstechen der Formkörper ein Niederhalter auf das Formtablett aufgepresst wird.

Das Wesen der Erfindung nach Verfahren und Vorrichtung liegt demnach darin, daß in konstruktiv einfacher Art und in besonders schneller Aufeinanderfolge mittels einem Formtablett aus dem breiartigen Gemisch die Formkörper ausgestochen werden. Dieser Vorgang ist vergleichbar mit der Herstellung von Gebäck aus einem Kuchenteig, wo ebenfalls aus dem ausgewalzten Teig mittels einer Ausstechform die einzelnen Gebäckstücke ausgestochen werden.

In vorteilhafter Ausgestaltung des Verfahrens ist es vorgesehen, daß nach dem Aufbringen des Formtabletts in Verbindung mit dem Ausstechen der Formkörper diese von unten her mit einem mittigen Anstich versehen werden, welcher später den Keimling aufnimmt.

Der in dem Formtablett befindliche - noch nicht ausgehärtete Formkörper wird im weiteren in eine Pufferstation zur Aushärtung und Zwischenlagerung verbracht.

In weiterer Ausgestaltung des Verfahrens ist es vorgesehen, daß die in dem Formtablett enthaltenen ausgestochenen Formkörper zentrifugiert und entwässert werden, wobei überflüssiges Wasser entfernt wird.

In weiterer Ausgestaltung ist es vorgesehen, daß die Formkörper aus dem Formtablett in einer Trennstation ausgestossen werden.

Bei dem Verfahren ist es vorteilhaft, daß der Breistrang kontinuierlich erzeugt werden kann und im weiteren das Ausstechen und Verarbeiten der Formkörper ebenfalls kontinuierlich im Durchlaufverfahren erfolgt.

In besonderer Ausgestaltung betreffend das Durchlaufverfahren ist es vorgesehen, daß nach dem Entwässern und dem Ausstoßen der Formkörper aus dem Formtablett das entleerte Formtablett in die Anfangsstellung zum Ausstechen der Formkörper zurückgeführt wird.

Aus den Unteransprüchen ergeben sich weitere vorteilhafte Ausgestaltungen - insbesondere Vorrichtungsmerkmale - um die Formkörper in vorteilhafter Weise weiter zu behandeln.

Die Erfindung wird nun unter Bezugnahme auf die Zeichnungen näher erläutert, wobei sich aus der nachfolgenden Beschreibung weitere vorteilhafte Merkmale ergeben.

Es zeigen:

Figur 1     eine Seitenansicht der Vorrichtung zur Herstellung der Formkörper,

Figur 2     eine Aufsicht auf die Vorrichtung nach Figur 1 mit zusätzlich angeordnetem Rückführband zur Rückführung der Formtabletts an den Anfang der Vorrichtung.

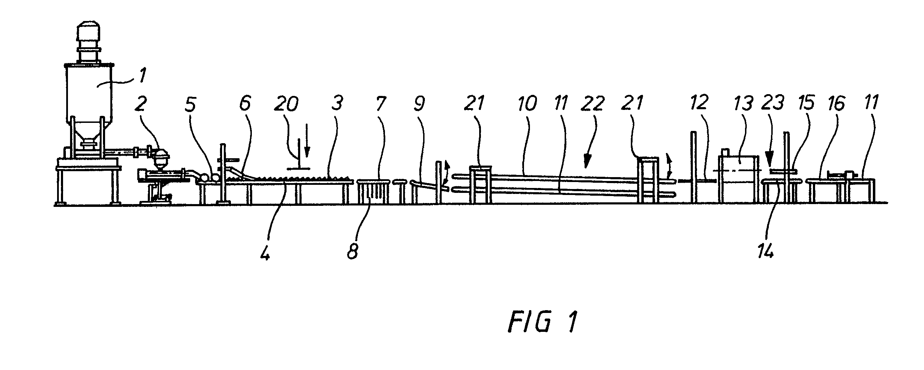

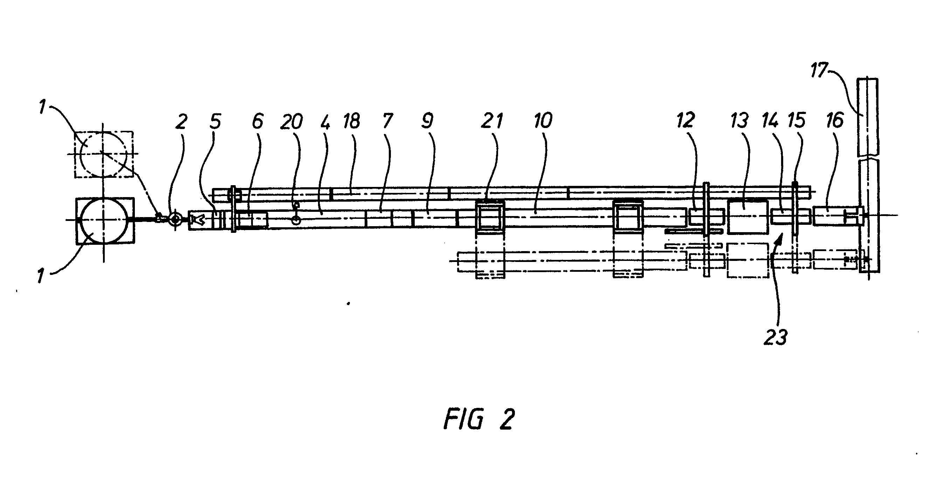

Aus den Figuren 1 und 2 ist ersichtlich, daß zunächst eine Torf-Wasser-Station nach Art einer Mischstation 1 vorgesehen ist, an welche sich eine weitere Mischvorrichtung 2 anschließt, über welche der Kunststoffanteil Hypol dem Torf-Wassergemisch zugesetzt wird. Am Auslauf der Mischstation 2 wird das Torf-Wasser-Kunststoffgemisch in Form des Gemisches 3 in Form eines endlosen Breistranges auf das Förderband 4 aufgegeben, welches sich unter dem Auslauf der Mischstation 2 bewegt. Dieser endlose Breistrang bzw. das Gemisch 3 wird in Förderrichtung gefördert. Der Breistrang durchläuft zunächst eine Walze 5, die dafür sorgt, daß der Breistrang mit einer Höhe von etwa 4 oder 5 cm in gleichmässiger Dicke verteilt über die Breite des Förderbandes 4 angeordnet wird.

Aus Figur 1 ist ersichtlich, daß das Gemisch 3 eine Art von Teppich auf dem Förderband 4 bildet, wobei im folgenden hier nicht dargestellte Formtabletts von oben über einen Niederhalter 20 in den noch nicht ausgehärteten Formbrei eingepresst werden. Es handelt sich hierbei um einen Vorgang, der vergleichbar mit dem Ausstechen von Gebäck aus einer Teigmasse ist. Derselbe Ausstechvorgang wird hier mit den Formtabletts oder Trays gemacht, wobei dann am Ende des Förderbandes 4 die noch nicht ausgehärtete Kunststoff-Torf-Wassermischung in den Formtabletts enthalten ist. In den Formtabletts sind einzelne Abteile ausgebildet, in denen dann jeweils ein Formkörper enthalten ist.

Aus Figur 1 in Verbindung mit Figur 2 ist ersichtlich, daß die Formtabletts ausgehend von einem Rückführband 18 über einen Querförderer 19 über eine Rutsche 6 auf das Gemisch 3, welches auf dem Förderband 4 lagert, aufgegeben werden.

Am Auslauf des Förderbandes 4, wo das Ausstechen der Formkörper stattfindet, ist ein weiteres Förderband angeordnet, welches in nicht näherer Darstellung aus einzelnen Förderstreifen besteht, wobei zwischen den Förderstreifen ein gegenseitiger Abstand von etwa 5 mm besteht. In diesem Abstand sind heb- und senkbar Nageldorne eines Nagelkissens 8 vorgesehen, wodurch die Nagelstation 7 nach Figur 1 gebildet wird. Die Formtabletts durchlaufen im Durchlaufverfahren über das Band der Nagelstation 7. Sobald ein Formtablett die Nagelstation 7 mit den einzelnen Nageldornen bzw. Nadeldornen erreicht hat, fährt ein Nadelkissen 8 nach oben und es wird in jeden Kunststoffkörper ein mittiges Loch oder ein Einstich eingebracht, in welchen später der Keimling zum Auskeimen bei dem fertiggestellten Formkörper hineingedrückt wird.

Nach dem Anbringen dieser mittigen Ausnehmung bzw. Anstich in jeder Formabteilung des Formtabletts gelangt das Formtablett in eine Verteilerstation, die im wesentlichen aus einem heb- und senkbar angebrachten Schwenkband 9 besteht. Dieses Schwenkband 9 fördert die noch nicht ausgehärteten, in dem Formtablett befindlichen, Formkörper in eine Pufferstation 22. Die Pufferstation 22 besteht innerhalb eines Gestells 21 aus einem oberen Pufferband 10 und aus einem parallel dazu und im Abstand darunter angeordneten weiteren Pufferband 11. Die Pufferbänder 10,11 sind relativ lang und haben eine Länge von etwa 10 m, so daß auf diesen Förderbändern insgesamt jeweils 18 Formtabletts gelagert werden können.

Es handelt sich demnach hierbei um eine Pufferstation 22, die nach und nach von vorne bis hinten fortlaufend mit Trays oder Formtabletts aufgefüllt wird. Im Bereich dieser Pufferstation 22 erfolgt nun die Aushärtung des Kunststoff-Wasser-Torfgemisches, wobei der Kunststoff sich mit dem Torf-Wassergemisch verbindet und hierbei einen elastischen, wasseraufsaugenden Plug bzw. den Formkörper bildet.

Am Auslauf der Pufferstation 22 ist nun nach den Figuren 1 und 2 ein Übergabe- bzw. Zuführband 12 angeordnet, von dem aus die einzelnen Formtabletts von dem oberen oder unteren Förderband 10,11 in eine Zentrifuge 13 eingeschoben werden. In der Zentrifuge 13 können beispielsweise eine Anzahl von 18 oder mehr Formtabletts gleichzeitig entwässert werden. Die Zentrifuge 13 wird gestartet und das Wasser, welches noch in den Formtabletts nach dem Aushärtevorgang verbleibt, wird abgeschleudert.

Die Formtabletts werden durch eine Auslassvorrichtung oder durch ein Austragsband 14 aus der Zentrifuge 13 entnommen und einer Trennstation 23 zugeführt. Diese Trennstation 23 besteht im wesentlichen aus dem Austragsband 14, über dem in nicht näherer Darstellung Dornen oder Auswerferkissen heb- und senkbar angeordnet sind.

Der Austragsvorgang aus der Zentrifuge 13 erfolgt derart, daß die Zentrifugentrommel stehen bleibt und dann am Einlauf drei Stück Formtabletts eingeschoben werden. Hierbei werden gleichzeitig am Auslaß der Zentrifuge 13 drei Formtabletts ausgeschoben, die auf das Austragsband 14 mit den Ausstoßdornen gelangen.

Wenn auf dem Austragsband 14 die Auswerfereinrichtung in Tätigkeit getreten ist und die Plugs aus dem Formtablett ausgestossen sind, wird die Trommel der Zentrifuge 13 um einen bestimmten Winkelgrad gedreht, so daß noch weitere drei Formtabletts auf das nun leere Austragsband 14 ausgestossen werden, wo wiederum die Auswerfervorrichtung in Tätigkeit tritt. Dies erfolgt solange, bis sämtliche achtzehn am Einlauf der Zentrifuge 13 eingeschobene Formtabletts taktweise das Austragsband 14 erreicht haben.

Die Auswerfereinheit bzw. Trennstation 23 besteht im wesentlichen aus vertikal heb- und senkbar angeordneten Auswerferstiften, wobei jedem Formabteil auf dem Formtablett ein Auswerferstift zugeordnet ist. Damit werden die Formkörper bzw. Plugs aus den Formausnehmungen im Tablett herausgedrückt.

Die Tabletts werden im weiteren über einen Querförderer 15 auf ein in Figur 2 dargestelltes, über die gesamte Länge der Anlage sich erstreckendes, Rückführband 18 geschoben und werden im Durchlaufverfahren über dieses Rückführband 18 wieder zum Eingang der Vorrichtung zurückgefördert. Die Tabletts gelangen dann nach Figur 2 über den Querförderer 19 wieder unterhalb des Auslaufs der Mischstation 2 auf das dort befindliche Förderband 4, wobei die Formtabletts über die Rutsche 6 nach Figur 1 auf das Förderband 4 gelangen. Es findet demnach wieder ein Beschickungsvorgang statt, wie vorstehend geschildert wurde, wobei wiederum insbesondere im Durchlaufverfahren Formkörper ausgestochen werden.

Es wird darauf hingewiesen, daß die Torf-Wasserstation bzw. Mischstation nach Figur 1 in Verbindung mit der Mischstation 2, wo die Kunststoffmasse hinzugegeben wird, chargenweise arbeitet. Es wird in dieser Art immer eine Charge von z.B. 500 l bereitet, für die eine Produktionszeit von z.B. 3 Stunden vorgesehen ist.

Bei dem Verfahren nach der Erfindung in Verbindung mit der Vorrichtung ist es wesentlich, daß die Torf-Wassermischung kontinuierlich zubereitet wird und demzufolge auch kontinuierlich im Endlosverfahren in die Mischstation 2 eingespeist wird. Ein derartiges endloses Verfahren wird erreicht in Verbindung mit einem Extruder, in welchen die Torf-Wasser- bzw. Kunststoffmischung zugeführt wird, wobei die Zugabe endlos erfolgt.

In dieser Art kann das chargenweise Aufladen der Torf-Wasserstation bzw. Mischstation 1 vermieden werden. Es wird dann vielmehr im Durchlaufverfahren gearbeitet, wobei die nachfolgende Bearbeitung der Kunststoffkörper - insbesondere in Verbindung mit der Rückführung der Formtabletts - ebenfalls im Durchlaufverfahren erfolgt.

Für das Durchlaufverfahren ist das Rückführband 18 wichtig, welches sich über die gesamte Länge der Anlage erstreckt. Dieses Rückführband 18 fördert demnach in entgegengesetzter Richtung zur Förderrichtung der mit der Torf-Wasser-Kunststoffmischung beschickten Formtabletts. Auf diesem Förderband 18 werden demnach die aus der Zentrifuge 13 herausgeschobenen Formtabletts, die in dem Austragsband 14 entleert werden, über den Querförderer 15 auf das Rückführband 18 aufgegeben. Die entleerten Formtabletts werden dann über das Rückführband 18 und dem Querförderer 19 am Anfang der Vorrichtung über die Rutsche 6 wieder auf das breiartige Gemisch 3 für einen neuen Beschickungsvorgang aufgegeben.

Die erneut aufgegebenen Formtabletts liegen dann auf dem Formbrei bzw. Gemisch 3 nach Figur 1 auf und der nachfolgend über dem Förderband angeordnete Niederhalter 20 drückt dann das Formtablett in die weiche Formmasse ein, so daß es hier zu einem Ausstechvorgang kommt.

Am Auslauf der Vorrichtung nach Figur 1 ist für die ausgestossenen Formkörper im weiteren ein Übergabeband 16 vorgesehen und ein Verpackungsband 17, auf dem die Formkörper abgeführt werden.

ZEICHNUNGS-LEGENDE

1 Mischstation

2 Mischvorrichtung

3 Gemisch

4 Förderband

5 Walze

6 Rutsche

7 Nagelstation

8 Nagelkissen

9 Schwenkband

10 Pufferband

11 "

12 Zuführband

13 Zentrifuge

14 Austragsband

15 Querförderer

16 Übergabeband

17 Verpackungsband

18 Rückführband

19 Querförderer

20 Niederhalter

21 Gestell

22 Pufferstation

23 Trennstation

**Patentansprüche**

1. Verfahren zur Herstellung von Formkörpern aus Torf und synthetischem Material zum Aufziehen eines Sämlings, wobei der Sämling in dem Torf ggf. mit Zusätzen von Nährstoffen angeordnet ist und hierbei zunächst ein Gemisch aus Torf und Wasser ggf. unter Zusatz von Nährstoffen mit einem hydrophilen Polyurethan-Prepolymeren vermischt wird und aus dem breiartigen Gemisch Formkörper geformt werden, die anschließend aushärten, **dadurch gekennzeichnet,** daß das Gemisch (3) in Form eines endlosen Breistranges auf ein Förderband (4) aufgegeben und ausgewalzt wird und daß im weiteren mit einem Formtablett, welches von oben auf den Breistrang aufgedrückt wird, reihenweise Formkörper ausgestochen werden.

2. Verfahren nach Anspruch 1 , **dadurch gekennzeichnet,** daß nach dem Aufbringen des Formtabletts in Verbindung mit dem Ausstechen der Formkörper diese von unten her mit einem mittigen Anstich versehen werden, welches später den Keimling aufnimmt.

3. Verfahren nach den Ansprüchen 1 und 2, **dadurch gekennzeichnet,** daß der in dem Formtablett befindliche, noch nicht ausgehärtete, Formkörper im weiteren in eine Pufferstation (22) zur Aushärtung und Zwischenlagerung gebracht wird.

4. Verfahren nach den Ansprüchen 1 bis 3, **dadurch gekennzeichnet,** daß die in dem Formtablett enthaltenen ausgestochenen Formkörper zentrifugiert und entwässert werden, wobei überflüssiges Wasser entfernt wird.

5. Verfahren nach den Ansprüchen 1 bis 4, **dadurch gekennzeichnet,** daß die Formkörper aus dem Formtablett in einer Trennstation ausgestossen werden.

6. Verfahren nach Anspruch 1, **dadurch gekennzeichnet,** daß der Breistrang kontinuierlich erzeugt wird und im weiteren das Ausstechen und Verarbeiten der Formkörper kontinuierlich im Durchlaufverfahren erfolgt.

7. Verfahren nach Anspruch 4, **dadurch gekennzeichnet,** daß nach dem Entwässern und dem Ausstoßen der Formkörper aus dem Formtablett das entleerte Formtablett in die Anfangsstellung zum Ausstechen der Formkörper zurückgeführt wird.

8. Vorrichtung zur Herstellung von Formkörpern aus Torf und synthetischem Material zum Aufziehen eines Sämlings, wobei der Sämling in dem Torf ggf. mit Zusätzen von Nährstoffen angeordnet ist und hierbei zunächst in einer Mischstation ein Gemisch aus Torf und Wasser ggf. unter Zusatz von Nährstoffen hergestellt wird und im weiteren diesem Gemisch ein Kunststoff aus hydrophilen Polyurethan-Prepolymeren zugesetzt wird, wobei ein breiartiges Gemisch erzeugt wird, aus dem im weiteren Formkörper geformt werden, die anschließend aushärten, **dadurch gekennzeichnet,** daß ein Förderband (4) mit einer oberhalb angeordneten Walze (5) vorgesehen ist, wo der Breistrang ausgewalzt wird und daß oberhalb des Förderbandes (4) zur Zuführung des Formtabletts eine Rutsche (6) ausgebildet ist und im weiteren in Verbindung mit dem Ausstechen der Formkörper für das Formtablett ein Niederhalter (20) vorgesehen ist.

9. Vorrichtung nach Anspruch 8, **dadurch gekennzeichnet,** daß im Anschluß an das Förderband (4) eine Nagelstation (7) vorgesehen ist, wobei ein Nagelkissen (8) von unten her in die Formkörper einfährt.

10. Vorrichtung nach den Ansprüchen 8 und 9, **dadurch gekennzeichnet,** daß im Anschluß an die Nagelstation (7) ein Schwenkband (9) und übereinander angeordnete Pufferbänder (10,11) in einer Pufferstation (22) vorgesehen sind.

11. Vorrichtung nach den Ansprüchen 8 bis 10, **dadurch gekennzeichnet,** daß im weiteren ein Zuführband (12) zu einer Zentrifuge (13) und davon ausgehend ein Austragsband (14) sowie ein Querförderer (15) und ein Übergabeband (16) und ein Verpackungsband (17) vorgesehen sind.

12. Vorrichtung nach den Ansprüchen 8 bis 11, **dadurch gekennzeichnet,** daß ausgehend von dem Querförderer (15) der Zentrifuge (13) ein weiteres entgegengerichtetes Rückführband (18) vorgesehen ist, welches in kontinuierlichem Durchlaufbetrieb die Formtabletts an die Zuführrutsche (6) am Anfang der Vorrichtung zurückfördern.

FIG 1

EP 0 461 545 A2

FIG 2

EP 0 461 545 A2